# EUROPEAN PATENT APPLICATION

(11) **EP 4 227 526 A1**
(43) Date of publication of application: **16.08.2023**
(21) Application number: 22156048.5
(22) Date of filing: 10.02.2022
(51) Int. Cl.: F03D 17/00, B25J 5/00, B25J 19/02

(54) **INSPECTION VEHICLE FOR A ROTOR BLADE OF A WIND TURBINE**

(71) Applicant: Siemens Gamesa Renewable Energy A/S, 7330 Brande (DK)
(72) Inventor: Jakobsen, Mikael Stokholm, 7330 Brande (DK); Nielsen, Lars Holm, 8766 Noerre Snede (DK)
(74) Representative: SGRE-Association

(57) **Abstract**

The present invention relates to an inspection vehicle (10) for a rotor blade (31) of a wind turbine (30), the rotor blade (31) having a pressure side (41), a suction side (42), a leading edge (43), a trailing edge (44), an inner volume (45), an inner surface (46) defining the inner volume (45), an outer surface (47), and a web (37), the inspection vehicle (10) comprising a moving unit (11) for moving the inspection vehicle (10) on the inner surface (41), a camera unit (12) for taking the inspection images of the inner surface (41) when moving the inspection vehicle (10), a sensing unit (13) for sensing the environment of the inspection vehicle (10) when moving the inspection vehicle (10), and a controller (14) configured for controlling self-driving of the inspection vehicle (10) on the inner surface (41) and an autonomous inspection by the inspection vehicle (10) based on the sensed environment. The invention further comprises a computer program product (20) and method for performing the autonomous inspection of a rotor blade (31), a storage medium (21) having a computer program product (20) stored thereon, a wind turbine (30) as well as a rotor blade (31).

## Description

The present invention relates to an inspection vehicle for a rotor blade of a wind turbine, the rotor blade having a pressure side, a suction side, a leading edge, a trailing edge, an inner volume, an inner surface defining the inner volume, an outer surface, and a web, the inspection vehicle comprising a moving unit for moving the inspection vehicle on the inner surface and a camera unit for taking inspection images of the inner surface when moving the inspection vehicle. The invention further relates to a method and a computer program product for performing an inspection in a rotor blade and a computer-readable storage medium having such a computer program product stored thereon. In addition, the invention relates to a wind turbine and a rotor blade for a wind turbine.

Today, wind turbine blades are mainly inspected by use of manpower. However, a person is not able to reach more than approximately 30 to 40 % of common rotor blades when performing the inspection. This leaves a big part of the rotor blade not inspected. Manual inspection takes about 4 to 5 hours. Further, only experienced technicians are allowed to perform the inspection. Damages and/or defects are captured with cameras, while other parts of the rotor blade will not be captured.

WO 2012/097475 A1 shows a system and method for performing an internal inspection on a rotor blade of a wind turbine. The system includes a sensing device, a cable for raising and lowering the sensing device within the rotor blade, and a positioning device attached to at least one of the sensing device and the cable. The positioning device can be configured to space the sensing device apart from an interior surface of the rotor blade as the sensing device is raised and lowered within the rotor blade.

The problem with such method and system is that the inspection vehicle and its control unit are both rather heavy and difficult to carry. The time needed for performing an inspection is about 2 to 3 hours per rotor blade. Further, inspection still has to be performed by a specialist, who has to travel to the wind turbine to perform the inspection.

It is an object of the present invention to overcome the above-mentioned disadvantages. In particular, it is an object of the present invention to simplify inspection of wind turbines and rotor blades in particular.

Aforesaid object is achieved by the subject-matters of the claims. In particular, the object is achieved by an inspection vehicle according to claim 1, a method according to claim 10, a computer program product according to claim 11, a computer-readable storage medium according to claim 12, a wind turbine according to claim 13 as well as a rotor blade according to claim 15. Further features and details of the invention can be drawn from the dependent claims, the description, and the figures. Features and details discussed with respect to the inventive inspection vehicle are also correlated with the inventive method, the inventive computer program product, the inventive computer-readable storage medium, the inventive wind turbine, the inventive rotor blade, and the other way around.

According to the present invention, an inspection vehicle for a rotor blade of a wind turbine is provided. The rotor blade to be inspected may comprise a pressure side, a suction side, a leading edge, a trailing edge, an inner volume, an inner surface defining the inner volume, an outer surface, and at least one web. The inspection vehicle comprises a moving unit for moving the inspection vehicle on the inner surface and a camera unit for taking inspection images of the inner surface. According to the invention, the inspection vehicle further comprises a sensing unit for sensing the environment of the inspection vehicle when moving the inspection vehicle and a controller configured for controlling self-driving of the inspection vehicle on the inner surface and an autonomous inspection by the inspection vehicle based on the sensed environment.

Hereby, an inspection vehicle is provided, which does not require a person or a specialist for performing the desired inspection of the rotor blade. Consequently, the inspection can be performed independent on working hours and/or the availability of such persons. The inspection can thus further be performed on a more regular basis and with relatively low costs. The inspection vehicle can be regarded as an autonomous and self-driving inspection vehicle. That is, the inspection vehicle is not only capable of self-driving but can also autonomously inspect the environment and the inner surface of the rotor blade, respectively. In accordance with the present invention, self-driving can be understood as the capability of moving safely without human help and/or input. This function will be mainly achieved by means of the sensing unit continuously sensing the environment of the inspection vehicle. The inspection vehicle will be capable of driving autonomously in the rotor blade while the camera unit is taking inspection images. Taking images can be understood as taking photos and/or recording video. The images can be sent outside the wind turbine in real time for real time inspection. For this function, the inspection vehicle may comprise a transmitter for transmitting image data of the taken images outside the inspection vehicle. The transmitter may be configured for wireless data transmission, for example via Bluetooth, NFC and/or Wi-Fi. Alternatively, the images taken may just be saved on an internal memory of the inspection vehicle and may read out by a user at the inspection vehicle and/or a base station for parking and/or recharging the inspection vehicle.

Since there is no operator necessary for operating the inspection vehicle, the inspection vehicle can stay in the rotor blade and/or in the location to be inspected. Carrying around the inspection vehicle and/or a remote controller is not required anymore. Hence, damage during transportation of the inspection vehicle can be prevented. In addition, time for carrying the inspection vehicle around can be saved. The inspection vehicle may remain and/or stay in the desired location, preferably in the rotor blade, as long as regular inspections are required.

The sensing unit may comprise a plurality of sensor elements and sensors, respectively. The sensor elements can be provided in different locations at the inspection vehicle. In particular, the sensor elements can be located in a front part, a side part, a rear part, a top part, and/or a bottom part of the inspection vehicle. Further, the sensing unit may comprise different types of sensors.

The moving unit may comprise wheels for driving the inspection vehicle on the inner surface and inside the inner volume, respectively, during the inspection. It is preferred that the wheels are slip-proof and/or comprise a slip-proof coating and/or material like rubber. Further, it is preferred that the inspection vehicle comprises a length/height-ratio smaller than 6 or smaller than 5, in particular between 5,5 and 3 and preferably between 5 and 4. That is, the height of the inspection vehicle is, for example, not more than 1/5 of the length of the inspection vehicle. The inspection vehicle will then have the capability to drive on the inner surface with an inclination of, for example, up to 30 degrees from a horizontal position, meaning that the rotor blade to be inspected can be positioned anywhere between a horizontal position and a 30-degree angle from a horizontal position. This also allows for the rotor blades to be positioned in a socalled Y-position. Consequently, both blades can be inspected while turning upwards which will lower the time of an inspection as the rotor blade only has to be moved once from its original stop orientation. During the inspection, the rotor blade can be held in stop position and will not have to be pitched to operation, which makes the procedure safer and less time consuming. By having the rotor blades in Y-position, the entrance to the hub on the geared machines is relatively big. Therefore, rescue training for performing the inspection can be reduced - in case a person is required during the inspection.

The autonomous inspection can be performed without the need of any manual work at the wind turbine. Moreover, even if the inspection vehicle has to be carried to the rotor blade, the on-side work will be simplified since there is no specialist required for performing the inspection and operation of the inspection vehicle, respectively.

A manual remote control may be provided in addition, to help in unforeseen situations. For this reason, the inspection vehicle may comprise a receiver for receiving operation signals from such a remote control.

For safety reasons, the inspection vehicle may comprise a mounting portion for mounting a strap to the inspection vehicle which could be attached for the inspection. Further, the inspection vehicle may provide a rechargeable battery that can be recharged at a possible base station in the wind turbine or in the rotor blade.

The inspection vehicle may further comprise a lighting unit that will be able to illuminate the rotor blade surface at the location of the inspection vehicle and/or the field of view of the camera unit in order to improve the image quality as well as the self-driving performance. The controller may be configured to adjust the illumination of the lighting depending on a resulting image quality and/or properties of analyzed images. That is, in case the images are too dark or too bright, the illumination can be adjusted respectively. This procedure can be performed automatically by means of an AI-unit of the inspection vehicle and/or in a network away from the inspection vehicle which is configured to analyze the images and send corresponding analysis information to the controller, which might be configured to adjust the illumination depending on the received analysis information. In a preferred embodiment, the adjustment and/or calculation can be done by use of an onboard algorithm. The algorithm may also assess for any blur and other distortions and give feedback to the controller if recapturing images is needed. Therefore, the presently described components can be in signal connection with each other as far as necessary.

The camera unit for taking and/or recording the images may have only one camera or a plurality of cameras on different locations at the inspection vehicle. For example, the camera unit may comprise at least two ultra-wide angle cameras, preferably cameras for taking 360° images and/or for having at least 360° surface coverage. In addition, the camera unit may comprise tele-lenses and/or macro-lenses for taking detailed images of possible damages.

The inspection by means of the inventive inspection vehicle may cover up to 90 % of the inner rotor blade surface and will cover the whole surface of the inspected area. In addition, inspection will be much shorter than by means of conventional remote-controlled vehicles. By covering the whole surface during an inspection, it is easier for a rotor blade specialist in the back office to follow the development of any findings. The environment of the inspection vehicle to be sensed includes, in particular, the inner volume as well as the inner surface of the rotor blade.

The inspection vehicle may further comprise a measurement unit for measuring a distance and/or root from a base station, where the inspection vehicle starts the inspection, to the current location of the inspection vehicle during the inspection. Thus, the exact location of any defect can be found and/or identified. This measurement may be done with an encoder of the inspection vehicle counting the turns a shaft of the inspection vehicle makes. The measured values may then be translated into a corresponding root, distance, and/or position. By means of the measurement unit, it may also be possible to measure a distance from the camera unit and/or a camera of the camera unit to the blade surface, which makes it possible to calculate the size of any defect found.

The controller may comprise an ECU and/or computer for controlling the inspection vehicle and the functions of the inspection vehicle, respectively.

Moreover, the inventive inspection vehicle may comprise an accelerometer for measuring an acceleration of the inspection vehicle, wherein the controller is configured for controlling the self-driving of the inspection vehicle and the autonomous inspection by the inspection vehicle based on the measured acceleration of the inspection vehicle. Using the accelerometer, dead reckoning, determining the position, the orientation, and the velocity of the inspection vehicle can be performed and the self- and/or autonomous driving of the inspection vehicle can be improved. In addition, or alternatively, an inventive inspection vehicle may further comprise at least one tilt sensor to measure pitch and/or roll positions of the inspection vehicle, wherein the controller is configured for controlling the self-driving of the inspection vehicle and the autonomous inspection by the inspection vehicle based on the measured pitch and/or roll position of the inspection vehicle.

In accordance with a further embodiment of the present invention, the sensing unit can comprise a 3D-stereovision unit for taking stereoscopic images of the environment of the inspection vehicle, wherein the controller is configured for controlling the self-driving of the inspection vehicle and the autonomous inspection by the inspection vehicle based on the stereoscopic images taken. Stereoscopic images and stereoscopic vision, respectively, provide a deep sense of perception. It helps to achieve accuracy by determining obstacles in the environment of the inspection vehicle and thus, a safe self-driving can be achieved. The sensing unit may comprise at least one 3D-stereovision unit. For example, the sensing unit and/or the inspection vehicle may comprise a 3D-stereovision unit in a front part and in a rear part of the inspection vehicle. 3D-stereovision can be understood as the extraction of 3D information from at least two digital images, such as the inspection images obtained by the camera unit. By comparing information about a scene from two vantage points, 3D information can be extracted by examining the relative positions of objects in the two images. Hence, the 3D-stereovision unit may comprise at least two cameras and/or a camera with two lenses being spaced from each other.

Further, it is possible in an inventive inspection vehicle that the sensing unit comprises a lidar unit for taking depth images of the environment of the inspection vehicle, wherein the controller is configured for controlling the self-driving of the inspection vehicle and the autonomous inspection by the inspection vehicle based on the depth images taken. Due to the short wavelength of the lidar unit, obstacles and objects in the environment can be determined with high accuracy, by means of which the self-driving can be performed in a correspondingly accurate and safe manner.

In addition, or alternatively, it is possible that a sensing unit of an inventive inspection vehicle comprises a radar unit for radar monitoring the environment of the inspection vehicle, wherein the controller is configured for controlling the self-driving of the inspection vehicle and the autonomous inspection by the inspection vehicle based on the radar monitoring. The radar unit can be easily used and/or operated in a dark environment. Further, the radar unit provides long operating distances. Therefore, a forward-looking and/or proactive self-driving of the inspection vehicle can be achieved.

According to a further embodiment of the present invention, the moving unit of an inspection vehicle may comprise a caterpillar drive for moving the inspection vehicle on the inner surface. Even though a caterpillar drive may provide a slower and/or more complicated drive compared to a conventional wheel drive, it was found that by means of a caterpillar drive the inspection vehicle can be moved accurately and reliably even on an inner surface having an inclination of about 30 degrees or more, for example. It is preferred that a chain and/or belt of the caterpillar drive, which contacts the inner surface when performing the autonomous inspection, are slip-proof and/or comprise a slip-proof coating and/or material like rubber.

An inspection vehicle according to the present invention may further comprise a motion unit, wherein the camera unit comprises a first camera and a second camera, and wherein the motion unit is configured for moving the first camera and/or the second camera relative to a chassis of the inspection vehicle and/or for moving the first camera and the second camera relative to each other. Having two cameras, a higher inspection quality with less vehicle movement can be achieved. The first camera can be mounted in a front part of the inspection vehicle and the second camera can be mounted in a rear part of the inspection vehicle, wherein both cameras can be moved by the motion unit independently from each other. Further, in case a damage and/or defect is detected in the environment of the inspection vehicle and/or in the rotor blade, respectively, it is further possible that the camera unit will be moved closer to the damaged part by the motion unit. Consequently, images with a better image quality and/or with better details of the damage can be captured. The motion unit may comprise at least one stick and/or arm, in particular an articulated arm, for moving the camera unit. The motion unit may further comprise a guiding system for a guided movement of the camera. The guiding system can be configured for guiding at least one of the at least two cameras on a circular path, for example on a circular path between 0 and 180 degrees. By means of the guiding system, more stable and thus sharper inspection images can be made.

Furthermore, it is possible that in an inspection vehicle according to the present invention, the controller is configured for moving the camera unit by means of the motion unit based on the sensed environment. That is, the controller may be configured to automatically move the camera unit by means of the motion unit, for example closer to damaged part of the rotor blade, while the chassis does not move, when such damaged part is sensed and/or determined by the sensing unit or detected by means of the camera unit. This may be supported by an algorithm and/or an AI-unit installed in the controller which recognizes the damaged part by means of data and/or images generated by the sensing unit and/or the camera unit and initiates the movement of the camera unit in a direction toward the damage and/or defect.

Moreover, the camera unit, the sensing unit and/or the controller of an inventive inspection vehicle may each comprise a plug contact for manually installing the camera unit, the sensing unit and/or the controller into the inspection vehicle. With the plug contacts, the inspection vehicle can be assembled according to a modular principle, by means of which units like the camera unit, the sensing unit and/or the controller can be easily replaced for maintenance and/or upgrade reasons. The plug contact being configured for manually installing the units can be understood such that there are no tools necessary for installing the camera unit, the sensing unit and/or the controller in the inspection vehicle.

An inspection vehicle may further comprise a data receiver for receiving instruction data from outside the wind turbine to start the autonomous inspection. With the data receiver, it is possible to control, drive and/or trigger the inspection vehicle from far away, for example from a land-based platform, while the inspection vehicle is in an inner volume inside an off-shore wind turbine. In addition, the instruction data may also be sent from a base station inside the wind turbine where the inspection vehicle can be parked when there is no inspection necessary. For example, the instruction data may also be received from a controller of the wind turbine. The data receiver may be configured as a data transceiver for sending feedback signals to a transmitter transmitting the instruction data. The data receiver may be configured for wirelessly receiving the instruction data. Images captured during the inspection can be sent either directly from the inspection vehicle or from a mobile application controlling it to the base station or a cloud server for storing and/or computing the images. The communication between the inspection vehicle, the base station, the mobile application and/or a wind turbine network may either be a wired or a wireless one.

In accordance with another embodiment of the present invention, an inspection vehicle may comprise a data analyzing unit for on-board analyzing data relating to a performed inspection by the inspection vehicle, relating to a functional condition of the inspection vehicle and/or relating to the environment of the inspection vehicle, and a determining unit for determining an automatic start for the inspection by the inspection vehicle based on analyzed data relating to the performed inspection by the inspection vehicle, relating to the functional condition of the inspection vehicle and/or relating to the environment of the inspection vehicle. Hereby, the inspection vehicle and/or the controller do not need to receive an external starting signal, for example by a human operator, in order to start an inspection routine. For example, when it is noticed via the analyzed data that the last inspection took place six month ago and the inspection has to be performed twice a year, the inspection vehicle knows that a further inspection has to be performed now. Further or alternatively, when it is noticed via the analyzed data that the battery of the inspection vehicle is not fully charged and/or that there is a temperature below 0°C in the rotor blade and thus, there is the possibility of a slippery surface, the controller may not start the inspection in order to prevent damages and/or problems during the inspection.

Further, in an inventive inspection vehicle, the controller may comprise a routing unit configured for routing the inspection vehicle depending on predetermined routing information. That is, it is possible to store predetermined routing information on a memory of the inspection vehicle in order to make sure that the inspection will be performed preferably as desired. The routing information may contain information about how long the inspection vehicle may perform one inspection cycle, how often the inspection cycle will be performed and/or the pace of the inspection vehicle during the autonomous inspection.

In addition, given that the rotor blade comprises a rear blade channel between the web and the trailing edge and a front blade channel between the web and the leading edge, the routing unit of an inventive inspection vehicle may be configured for routing the inspection vehicle, during autonomous inspection, at first into the rear blade channel and thereafter into the front blade channel. It was found that this routine can be advantageous in view of a preferably efficient routing of the inspection vehicle. Consequently, the autonomous inspection can be performed equivalently efficient, in particular energy-efficient. In a preferred embodiment, the routing unit may be configured to drive and/or move the inspection vehicle from a root section of an integral blade having the web or at least one web, in particular from a center of the root section, in a direction to a tip section of the rotor blade. When getting closer to the web, which is located, for example, in a center section of the rotor blade, the routing unit may automatically, for example based on the routing information, choose to move the inspection vehicle down on one side of the web, preferably into the rear blade channel and most preferably near to the web for inspection of the web. The inspection vehicle may then follow the web, preferably with a constant distance to the web, down through the inner volume of the rotor blade and/or the rear blade channel, until an area inside the inner volume of the rotor blade and/or the inner surface gets too narrow for the inspection vehicle to continue further. If such a section of the rotor blade is sensed by the sensing unit and/or recognized by the routing unit based on the routing information, the routing unit and/or the sensing unit may then make the inspection vehicle stop and/or reverse back. Now, the routing unit may move the inspection vehicle back to the root section and near to an inner surface of the rotor blade opposite to the web, until the inspection vehicle reaches an end section of the web. The routing unit may be further configured to now move the inspection vehicle down the other side of the web and the front blade channel, respectively. Like before, when moving toward the tip section, the inspection vehicle will be moved closer to the web and when moving back from the tip section to the root section, the inspection vehicle will be moved closer to the inner surface opposite to the web. When the autonomous inspection of both sides of the web and/or the rear blade channel and the front blade channel has been performed, the routing unit may be configured to move the inspection vehicle up to the root end again and, for example, capture images towards the blade bearing. In this way, the inner surface of the rotor blade can be extensively captured. In rotor blades that are constructed as box blades, the routing unit may be configured to move the inspection vehicle in the center of the inner volume of the rotor blade from the root end and towards the tip end as far as the design of the rotor blade has room for the inspection vehicle.

A further aspect of the invention relates to a method for performing an autonomous inspection of a rotor blade mounted at a wind turbine by means of an inspection vehicle as described above. Therefore, the inventive method brings up the same advantages that have been discussed in detail with respect to the inventive inspection vehicle. When executing the method, instruction data from outside the wind turbine can be sent to the inspection vehicle inside the inner volume of the rotor blade to remotely start the autonomous inspection of the rotor blade by the inspection vehicle. In particular, an inventive method for performing an inspection can be performed based on the above described routing information. That is, according to an inventive method, the inspection vehicle can be moved and/or driven, during autonomous inspection, at first into the rear blade channel closer to the web, back out of the rear blade channel on a side closer to the inner surface opposite to the web, then into the front blade channel closer to the web, thereafter back out from the front blade channel closer to the inner surface opposite to the web, and then back to the root end and/or a base station for parking and/or holding the inspection vehicle.

The present invention further relates to a computer program product comprising instructions which, when the program is executed by a computer, for example the controller, cause the computer to carry out the described method by means of an inspection vehicle as described above. In addition, a computer-readable storage medium is proposed having stored thereon such a computer program product. Hence, the inventive computer program product and the storage medium bring up the above-described advantages as well.

The computer program product may be implemented as computer-readable instruction code in any suitable programming language and/or machine language, such as JAVA, C++, C#, and/or Python. The computer program product may be stored on a computer-readable storage medium such as a data disk, a removable drive, volatile or non-volatile memory, or a built-in memory/processor. The instruction code may program a computer or other programmable devices such as the controller in order to perform the desired functions. Further, the computer program product may be provided and/or be on a network, such as the internet, from which it may be downloaded by a user as needed. The computer program product may be implemented by means of software, as well as by means of one or more special electronic circuits, that is, in hardware or in any hybrid form, that is, by means of software components and hardware components.

An additional aspect of the invention relates to a wind turbine comprising rotor blades and a base station for parking, holding and/or electrically charging the inspection vehicle, wherein the base station is located inside the inner volume of at least one rotor blade. In a possible embodiment, each rotor blade may comprise the base station. In addition, there may also be provided an inspection vehicle in every rotor blade and for every base station, respectively. A further aspect of the invention thus relates to a rotor blade for such a wind turbine, comprising a base station for parking, holding and/or electrically charging the inspection vehicle inside the inner volume of the rotor blade. With conventional inspection systems, inspection vehicles have to be placed in the hub or the nacelle of the wind turbine or have to be carried to the rotor blade for each inspection. This may change with the suggested autonomous system, making human operators no longer necessary at or in the wind turbine. The base station may be provided as an integral part of the rotor blade. That is, the base station may be built during production of the rotor blade.

Further measures improving the inventive concept can be drawn from the following description of preferred embodiments, which are schematically shown in the drawings. The features and advantages which can be drawn from the claims, from the description and from the drawings might be considered essential alone or in combination with each other.

The present invention is discussed in more detail with respect to the accompanying drawings, in which
- Fig. 1: shows an inspection vehicle according to a first embodiment of the present invention,
- Fig. 2: shows an inspection vehicle according to a second embodiment of the present invention,
- Fig. 3: shows an inspection vehicle according to a third embodiment of the present invention,
- Fig. 4: shows the inspection vehicle shown in Fig. 3 in an exploded view,
- Fig. 5: shows a rotor blade for explaining an inventive method for performing an autonomous inspection,
- Fig. 6: shows a flow chart for explaining the inventive method,
- Fig. 7: shows an inventive storage medium having a computer program product stored thereon, and
- Fig. 8: shows a wind turbine with a rotor blade according to the present invention.

Elements and features having the same function and operating principle are labeled with the same reference signs in the drawings.

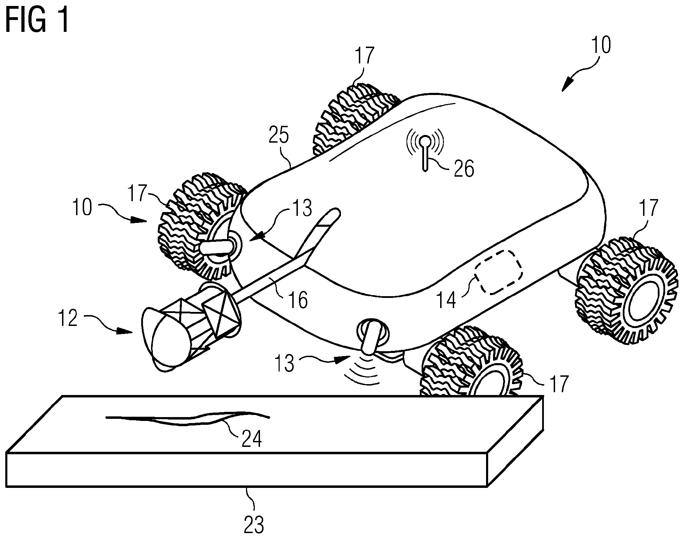

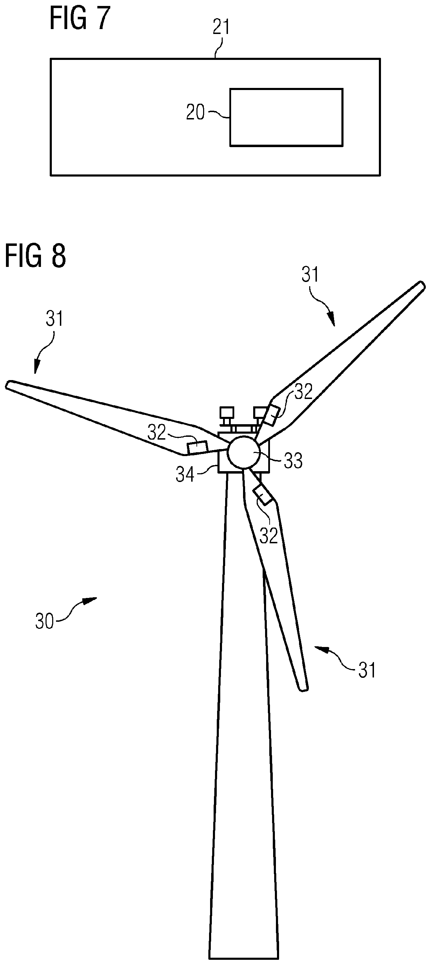

Fig. 1 shows an inspection vehicle 10 according to a first embodiment for performing an autonomous inspection of a rotor blade 31 of a wind turbine 30, which is shown in Fig. 8. The inspection vehicle 10 comprises a moving unit 11 having four wheels 17 for moving the inspection vehicle 10 during the inspection inside the inner volume 45 of the rotor blade 31 and on the inner surface 46, respectively. The inspection vehicle 10 further comprises a camera unit 12 having a plurality of cameras for taking 360° inspection images inside the inner volume 45 of the rotor blade 31 during the autonomous inspection. In addition, the inspection vehicle 10 comprises a sensing unit 13 for sensing the environment of the inspection vehicle 10 during the inspection and a controller 14 for controlling self-driving of the inspection vehicle 10 and an autonomous inspection by the inspection vehicle 10 based on the sensed environment. The shown vehicle 10 further comprises a data receiver 26 as a transceiver for wirelessly transmitting image data and receiving digital data like instruction data from outside the wind turbine. The inspection vehicle 10 further comprises a motion unit 16 for moving the camera unit 12 on a rod-shaped stick relative to a chassis 25 of the inspection vehicle 10. In Fig. 1, the inspection vehicle 10 parks in front of a sensed obstacle 23 that is damaged and has a defect 24.

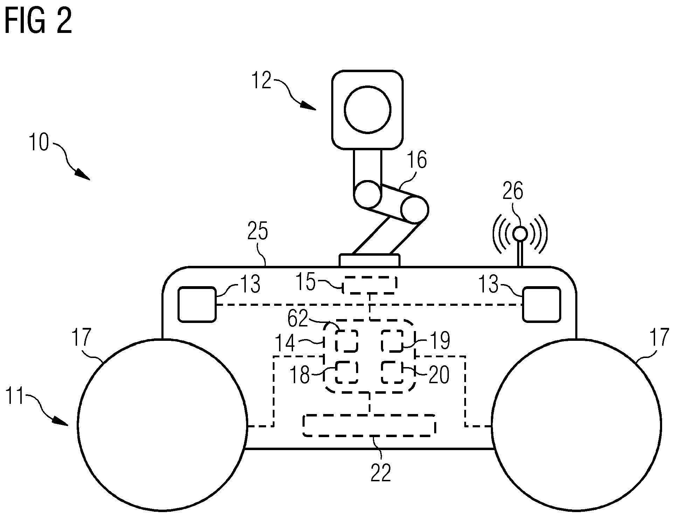

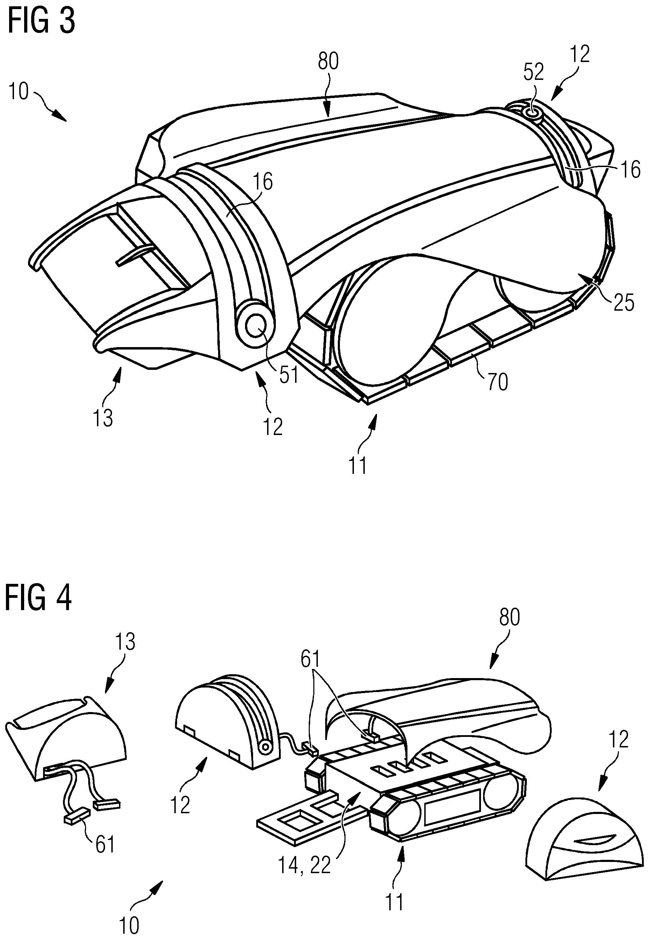

Fig. 2 shows an inspection vehicle 10 according to a second embodiment. The sensing unit 13 of the inspection vehicle 10 comprises a 3D-stereovision unit for taking stereoscopic images of the environment of the inspection vehicle 10, a lidar unit for taking depth images of the environment of the inspection vehicle 10 as well as a radar unit for radar monitoring the environment of the inspection vehicle 10 (each not shown in detail). The controller 14 is configured for controlling the self-driving of the inspection vehicle 10 and the autonomous inspection by the inspection vehicle 10 based on the stereoscopic images taken, based on the depth images taken and based on the radar monitoring. In addition, the inspection vehicle 10 comprises an accelerometer 15 for measuring an acceleration of the inspection vehicle 10, wherein the controller 14 is further configured for controlling the self-driving of the inspection vehicle 10 and the autonomous inspection by the inspection vehicle 10 based on the measured acceleration of the inspection vehicle 10. In addition, or alternatively, the inspection vehicle 10 may further comprise at least one tilt sensor to measure pitch and/or roll positions of the inspection vehicle 10, wherein the controller 14 may then be configured for controlling the self-driving of the inspection vehicle 10 and the autonomous inspection by the inspection vehicle 10 based on the measured pitch and/or roll position of the inspection vehicle 10. As shown in Fig. 3, the inspection vehicle 10 comprises a battery 22 that can be recharged in a base station 32 and a recharging unit of the base station 32, respectively. In the shown inspection vehicle 10, the controller 14 comprises a routing unit 62 configured for routing the inspection vehicle 10 depending on predetermined routing information. The routing unit 62 may also be provided outside the controller 14 and/or as a separate part of the inspection vehicle 10. The routing information may be stored and/or installed in a memory of the inspection vehicle 10 and/or drawn from a network like the internet for each autonomous inspection.

As can be drawn from Fig. 3, the motion unit 16 comprises an articulatable robot-arm for moving the camera unit 12 in different orientations and different directions. The controller 14 is further configured for moving the camera unit 12 by means of the motion unit 16 based on the sensed environment. The controller 14 comprises an analyzing unit 18 for analyzing data relating to a performed inspection by the inspection vehicle 10, relating to a functional condition of the inspection vehicle 10 and relating to the environment of the inspection vehicle 10. In addition, the controller 14 comprises a determining unit 19 for determining an automatic start for the inspection by the inspection vehicle 10 based on analyzed data relating to the performed inspection by the inspection vehicle 10, relating to the functional condition of the inspection vehicle and relating to the environment of the inspection vehicle 10. Furthermore, in the controller 14 of Fig. 3, a computer program product 20 is installed comprising instructions which, when the program is executed by the controller 14 and/or a computer of the controller 14, cause the computer to carry out the method for self-driving and autonomously inspecting the environment of the inspection vehicle 10 by means of the inspection vehicle 10.

Fig. 3 shows an inspection vehicle 10 according to a third embodiment. The inspection vehicle 10 of Fig. 3 comprises not a conventional wheel-drive but a caterpillar drive 70 with rubber bands for slip-proof driving of the inspection vehicle 10. The height/length-ratio of the shown inspection vehicle 10 is about 5, that is, the inspection vehicle 10 is five times longer than high. The camera unit 12 comprises a first camera 51 and a second camera 52. The motion unit 16 is configured for moving the first camera 51 and the second camera 52 relative to the chassis 25 of the inspection vehicle 10 and relative to each other. The first camera 51 is mounted in a front part of the inspection vehicle 10 and the second camera 52 is mounted in a rear part of the inspection vehicle 10, wherein both cameras 51, 52 can be moved by the motion unit 16 independently from each other. The motion unit 16 of the shown inspection vehicle 10 further comprises a guiding system for a guided movement of the cameras 51, 52. In particular, each camera 51, 52 can be guided and moved on a circular path between 0 and 180 degrees. The shown inspection vehicle 10 further comprises a protection unit 80 as a cover against environmental influences.

Fig. 4 shows the inspection vehicle 10 of Fig. 3 in an exploded view. Here, it can be seen that the camera unit 12, the sensing unit 13, the controller 14 and the battery 22 (being installed in the same housing) each comprise a plug contact 61 for manually installing these units into the inspection vehicle 10.

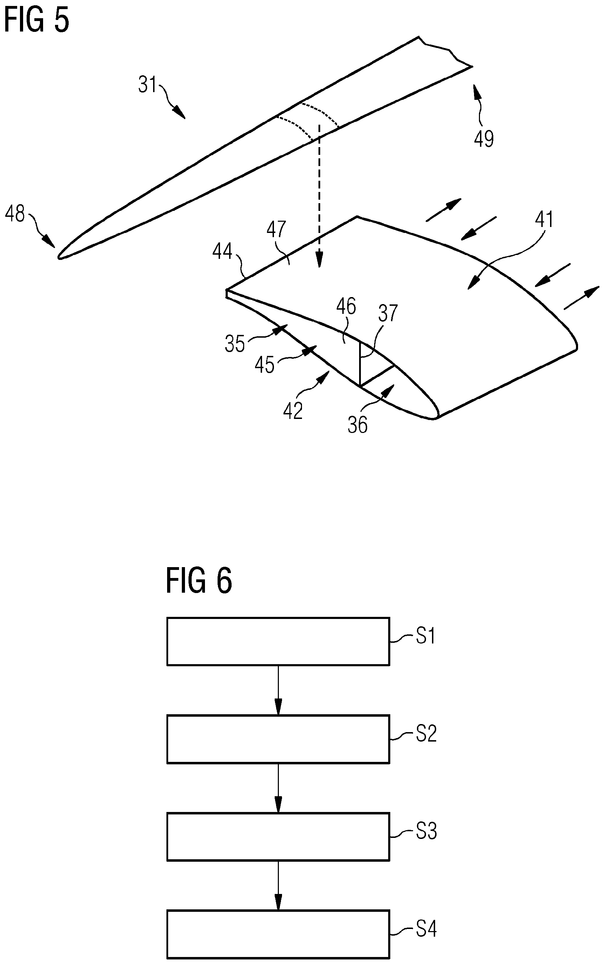

Fig. 5 shows a rotor blade 31 for a wind turbine 30 as shown in Fig. 8. The rotor blade 31 comprises a tip section 48, a root section 49, an upper pressure side 41, and a lower suction side 42. Further, the rotor blade 31 comprises a leading edge 43 and a trailing edge 44. Moreover, the rotor blade 31 comprises an outer surface 47, an inner surface 46, an inner volume 45 defined by the inner surface 46 and a web 37. The web 37 divides a part of the inner volume 45 into a rear blade channel 35 and a front blade channel 36. In other words, the rear blade channel 35 and the front blade channel 36 extend in a longitudinal direction of the rotor blade 31 and are separated from each other by the web 37.

Fig. 6 shows a flow chart for explaining a method for performing an autonomous inspection of a rotor blade 31 shown in Fig. 5. In a first step S1, routing information for routing the inspection vehicle 10 for autonomous inspection is provided. In a second step, the environment is sensed by the sensing unit 13. In a third step S3, data generated during the sensing is analyzed by the analyzing unit 18. In a fourth step S4, the controller 14 controls self-driving and the autonomous inspection based on the analyzed data, the sensed environment as well as the routing information. As indicated in Fig. 5 by the four arrows, the inspection vehicle 10 will be moved at first into the rear blade channel 35 closer to the web 37, back out of the rear blade channel 35 on a side closer to the inner surface 46 opposite to the web 37 and closer to the trailing edge 44, then into the front blade channel 36 closer to the web 37, thereafter back out from the front blade channel 36 closer to the inner surface 46 opposite to the web 37 and closer to the leading edge 43, and then back to the root section 49 and/or a root end, where the inspection vehicle 10 will be parked at a base station 32 as shown in Fig. 8.

Fig. 7 shows a non-volatile computer-readable storage medium 21 having stored thereon the computer program product as described above, by means of which the above described method for performing an autonomous inspection of a rotor blade 31 can be executed.

Fig. 8 shows a wind turbine 30 comprising a nacelle 34, a hub 33 and three rotor blades 31, wherein a base station 32 for parking, holding and electrically charging the inspection vehicle 10 is located inside the inner volume 45 of every rotor blade 31. Specifically, each rotor blade 31 comprises a base station 32 for parking, holding and electrically charging an inspection vehicle 10 inside the inner volume 45 of each rotor blade 31. In the shown example, the base station 32 is located in a root section and/or root end of each rotor blade 31.

The aforesaid description of the accompanying drawings is only by the way of detail and example. Specific features of each aspect of the present invention and the figures can be combined which each other if of technical sense.

## Claims

1. An inspection vehicle (10) for a rotor blade (31) of a wind turbine (30), the rotor blade (31) having a pressure side (41), a suction side (42), a leading edge (43), a trailing edge (44), an inner volume (45), an inner surface (46) defining the inner volume (45), an outer surface (47), and a web (37), the inspection vehicle (10) comprising
- a moving unit (11) for moving the inspection vehicle (10) on the inner surface (41),
- a camera unit (12) for taking inspection images of the inner surface (41) when moving the inspection vehicle (10),
- a sensing unit (13) for sensing the environment of the inspection vehicle (10) when moving the inspection vehicle (10), and
- a controller (14) configured for controlling self-driving of the inspection vehicle (10) on the inner surface (41) and an autonomous inspection by the inspection vehicle (10) based on the sensed environment.

2. The inspection vehicle (10) according to claim 1, wherein the sensing unit (13) comprises a 3D-stereovision unit for taking stereoscopic images of the environment of the inspection vehicle (10), a lidar unit for taking depth images of the environment of the inspection vehicle (10), and/or a radar unit for radar monitoring the environment of the inspection vehicle (10), wherein the controller (14) is configured for controlling the self-driving of the inspection vehicle (10) and the autonomous inspection by the inspection vehicle (10) based on the stereoscopic images taken, the depth images taken and/or the radar monitoring.

3. The inspection vehicle (10) according to one of the preceding claims, wherein the moving unit (11) comprises a caterpillar drive (70) for moving the inspection vehicle (10) on the inner surface (41).

4. The inspection vehicle (10) according to one of the preceding claims, comprising a motion unit (16), wherein the camera unit (12) comprises a first camera (51) and a second camera (52), and wherein the motion unit (16) is configured for moving the first camera (51) and/or the second camera (52) relative to a chassis (25) of the inspection vehicle (10) and/or for moving the first camera (51) and the second camera (52) relative to each other.

5. The inspection vehicle (10) according to claim 4, wherein the controller (14) is configured for moving the camera unit (12) by means of the motion unit (16) based on the sensed environment.

6. The inspection vehicle (10) according to one of the preceding claims, wherein the camera unit (12), the sensing unit (13) and/or the controller (14) each comprise a plug contact (61) for manually installing the camera unit (12), the sensing unit (13) and/or the controller (14) into the inspection vehicle (10).

7. The inspection vehicle (10) according to one of the preceding claims, comprising a data receiver (26) for receiving instruction data from outside the wind turbine (30) to start the autonomous inspection.

8. The inspection vehicle (10) according to one of the preceding claims, wherein a data analyzing unit (18) for analyzing data relating to a performed inspection by the inspection vehicle (10), relating to a functional condition of the inspection vehicle (10) and/or relating to the environment of the inspection vehicle (10), and a determining unit (19) for determining an automatic start for the inspection by the inspection vehicle (10) based on analyzed data relating to the performed inspection by the inspection vehicle (10), relating to the functional condition of the inspection vehicle and/or relating to the environment of the inspection vehicle (10).

9. The inspection vehicle (10) according to one of the preceding claims, wherein the controller (14) comprises a routing unit (62) configured for routing the inspection vehicle (10) depending on predetermined routing information.

10. The inspection vehicle (10) according to claim 9, wherein the rotor blade (31) comprises a rear blade channel (35) between the web (37) and the trailing edge (44) and a front blade channel (36) between the web (37) and the leading edge (43), wherein the routing unit (62) is configured for routing the inspection vehicle (10), during autonomous inspection, at first into the rear blade channel (35) and thereafter into the front blade channel (36).

11. A method for performing an autonomous inspection of a rotor blade (31) mounted at a wind turbine (30) by means of an inspection vehicle (10) according to one of the preceding claims.

12. A computer program product (20) comprising instructions which, when the program is executed by a computer, cause the computer to carry out the method of claim 11 by an inspection vehicle (10) according to one of claims 1 to 10.

13. A computer-readable storage medium (21) having stored thereon the computer program product according to claim 12.

14. A wind turbine (30) comprising rotor blades (31) and a base station (32) for parking, holding and/or electrically charging an inspection vehicle (10) according to one of claims 1 to 10, wherein the base station (32) is located inside the inner volume (45) of at least one rotor blade (31).

15. A rotor blade (31) for a wind turbine (30) according to claim 14, comprising a base station (32) for parking, holding and/or electrically charging the inspection vehicle (10) inside the inner volume (45) of the rotor blade (31).
